# EUROPEAN PATENT SPECIFICATION

(11) **EP 0 298 734 B1**
(45) Date of publication and mention of the grant of the patent: **25.05.1994**
(21) Application number: 88306195.4
(22) Date of filing: 07.07.1988
(51) Int. Cl.: C07F 7/18, C08K 5/54

(54) **Organosilicon compounds**
Organosilicium-Verbindungen
Composés organosilicés

(30) Priority: 08.07.1987 JP 170119/87
(43) Date of publication of application: 11.01.1989
(73) Proprietor: Shin-Etsu Chemical Co., Ltd., Chiyoda-ku Tokyo 100 (JP)
(72) Inventor: Satoh, Shinichi, Annaka-shi Gunmaken (JP); Fujioka, Kazutoshi, Annaka-shi Gunmaken (JP)
(74) Representative: Pett, Christopher Phineas

(56) References cited:
- EP-A- 0 243 802
- US-A- 4 650 889
- US-A- 4 711 943

## Description

This invention relates to organosilicon compounds, and particularly to organosilicon compounds useful for improving the adhesive properties of ultraviolet-curable silicone compositions or the like.

US 4650889 discloses a range of organosilane coupling agents prepared from the reaction of isocyanatoalkyl esters of acrylic or methacrylic acid and aminoorganosilanes. These agents are mentioned as being for use as adhesion promoters.

EP-A-0243802 discloses a range of silicone-urethane (meth)acrylates, including the reaction products of isocyanato-alkylsilanes with hydroxyethyl-, hydroxypropyl- and hydroxybutyl- (meth)acrylate. EP-A-0243802 is however only state of the art with respect to the present invention under Article 54(3) EPC.

We have been able to provide novel organosilicon compounds that are useful for improving the adhesive properties of ultraviolet-curable silicone compositions or the like. Such compounds are not believed to have been described previously.

According to this invention, there is provided an organosilicon compound represented by the general formula (I): 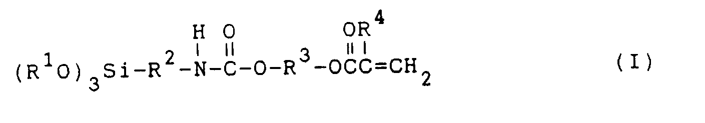
wherein, in each of the R¹O- groups,
R¹ may be the same or different and represents an alkyl group having 1 to 8 carbon atoms; R² and R³ may be the same or different and represent an alkylene group having 1 to 8 carbon atoms; and R⁴ represents a hydrogen atom or an alkyl group having 1 to 8 carbon atoms;
with the proviso that when R⁴ is a hydrogen atom or methyl group, R² is a C₂₋₅ alkylene group and R³ is a C₂₋₄ alkylene group, R¹, in each of the R¹O groups, is not a C₁₋₅ alkyl group.

### DETAILED DESCRIPTION OF THE INVENTION

In the above the general formula (I), any alkyl group having 1 to 8 carbon atoms, represented by R¹ and R⁴, may be straight or branched, including, for example, a methyl group, an ethyl group, a propyl group, an isopropyl group, and a butyl group, and the term includes cycloalkyl groups, such as a cyclopentyl group and a cyclohexyl group. An alkylene group having 1 to 8 carbon atoms, represented by R² and R³, may be straight or branched, including, for example, -CH₂-, -C₂H₄, -C₃H₆- and -C₄H₈.

The organosilicon compounds of formula (I) (not subject to the proviso above) can be synthesized by reacting an organosilicon isocyanate compound represented by the general formula (II):

(R¹O)₃Si-R²-N=C=O (II)

wherein R¹ and R² are as defined above;
with a compound represented by the general formula (III): 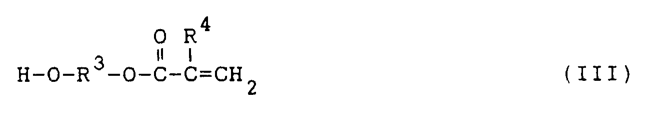
wherein R³ and R⁴ are as defined above;
in the presence of a catalyst. Useful as catalyst in this reaction are, for example, organic tin compounds such as dibutyltin maleate, tributyltin acetate, dimethyltin dichloride, dibutyltin diacetate and dibutyltin dilaurate; and tertiary amines such as N-methylmorpholine, triethylamine, N-methylpiperidine, N,N-dimethylcyclohexylamine and pyridine. Such catalysts will preferably be added in an amount of from 0.001 to 1 % by weight, particularly from 0.01 to 0.1 % by weight, based on the organosilicon compound of the general formula (II). The reaction is preferably carried out at a temperature of from 0 to 50°C, particularly from 20 to 40°C. The above reaction can usually be carried out without any solvent, but may be carried out using an organic solvent as exemplified by hexane, cyclohexane, benzene, toluene, xylene, tetrahydrofuran and acetonitrile, as required.

The thus-obtainable organosilicon compounds represented by the general formula (I) (not subject to the proviso above) are useful as an improver for improving the adhesive properties of ultraviolet-curable silicone resins to substrates. For example, they may be added in the ultraviolet-curable silicone resin in an amount of from 0.01 to 1.0 % by weight, whereby, after curing, the adhesion of the resin to substrates such as glass can be markedly improved.

This invention will be described below in greater detail by way of Examples.

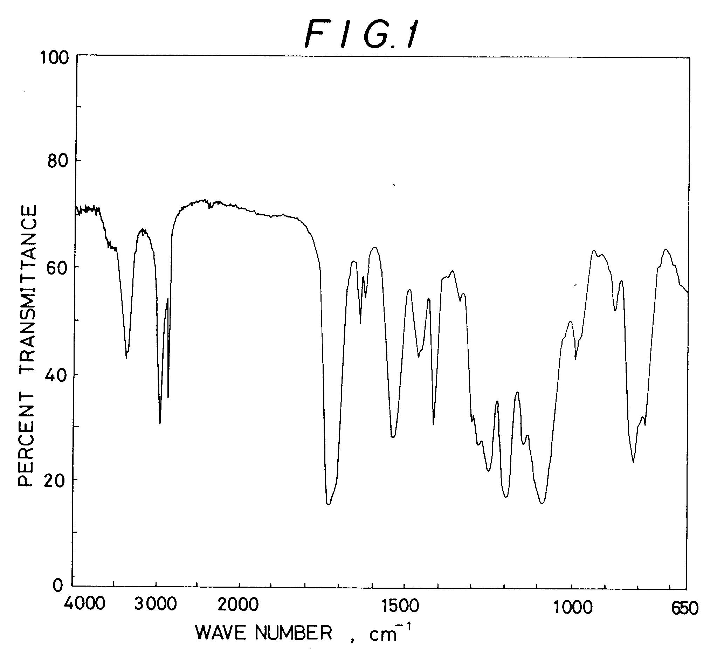

Fig. 1 to Fig. 5 show IR spectra of the organosilicon compounds of this invention obtained in Examples 1 to 5, respectively.

### EXAMPLES

### Example 1

In a three-necked flask equipped with a reflux condenser and a thermometer, 10.3 g of 3-isocyanatopropyltrimethoxysilane, 5.8 g of 2-hydroxyethyl acrylate and 0.01 g of dibutyltin maleate were charged, and the contents were stirred for 8 hours at room temperature. The resulting reaction mixture in amount of 150 mg was fractionated by gel permeation chromatograpy (GPC) to obtain 103 mg of a liquid product having a refractive index n$\frac{\text{25}}{\text{D}}$ of 1.4544.

This compound was subjected to measurement by GC-MS, ¹H-NMR spectrometry, IR spectrophotometry and elementary analysis to obtain the results shown below.
- GC-MS analysis: Parent ion peak, 321
- NMR: δ (ppm):
0.52 (t, Si-CH₂, 2H),
1.55 (m, -C-CH₂-C, 2H),
3.05 (q, CH₂-N, 2H),
3.35 (s, Si-OCH₃, 9H),
4.18 (s, O-CH₂-CH₂-O, 4H)
5.12 (s, N-H, 1H),
5.5-6.3 (m, 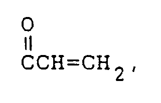 3H
- IR spectrum: As shown in Fig. 1.
Characteristic absorption bands (cm⁻¹)
3350 (N-H); 1726 (C=O); 1636, 1620 (C=C)
- Elementary Analysis: (%)

| | C | H | Si |
|---|---|---|---|
| Calculated: (as C₁₂H₂₃NSiO₇) | 44.8 | 7.2 | 8.7 |
| Found: | 44.9 | 7.0 | 8.6 |

From the foregoing results, the above product was identified to be a compound represented by the formula: 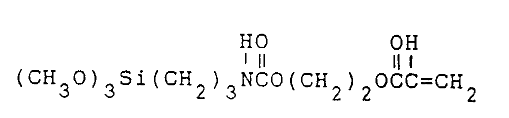
Yield: 69 %.

### Example 2

Example 1 was repeated except for using 6.8 g of 2-hydroxyethyl methacrylate in place of 2-hydroxyethyl acrylate, to obtain 112 mg of a liquid product having a refractive index n$\frac{\text{25}}{\text{D}}$ of 1.4630.

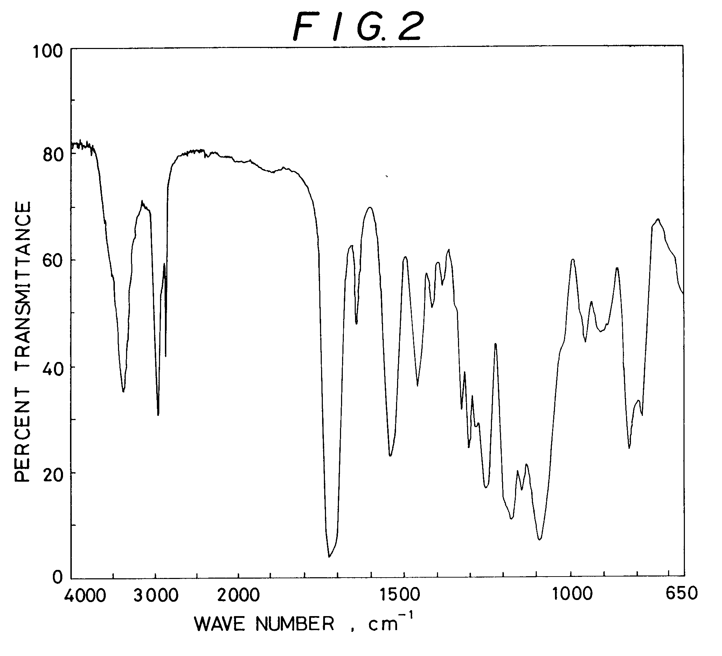

This compound was subjected to measurement by GC-MS, ¹H-NMR spectrometry, IR spectrophotometry and elementary analysis to obtain the results shown below.
- GC-MS analysis: Parent ion peak, 335
- NMR: δ (ppm):
0.57 (t, Si-CH₂, 2H),
1.60 (m, C-CH₂-C, 2H),
1.93 (s, CH₃, 3H),
3.10 (q, N-CH₂, 2H),
3.56 (s, SiO-CH , 9H),
4.23 (s, O-CH₂CH₂-O, 4H),
5.43, 6.03 (s, C=CH₂, 2H)
- IR spectrum: As shown in Fig. 2.
Characteristic absorption bands (cm⁻¹)
3350 (N-H); 1720 (C=O); 1637 (C=C)
- Elementary Analysis: (%)

| | C | H | Si |
|---|---|---|---|
| Calculated: (as C₁₃H₂₅NSiO₇) | 46.6 | 7.5 | 8.4 |
| Found: | 46.5 | 7.4 | 8.3 |

From the foregoing results, the above product was identified to be a compound represented by the formula: 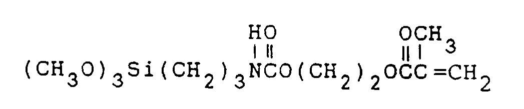
Yield: 76 %.

### Example 3

Example 1 was repeated except for using 6.2 g of 3-isocyanatopropyltriethoxysilane in place of 2-isocyanatopropyltrimethoxysilane and using 2-hydroxyethyl acrylate in a changed amount of 3.6 g, to obtain 97 mg (yield: 70 %) of a liquid product having a refractive index n$\frac{\text{25}}{\text{D}}$ of 1.4480.

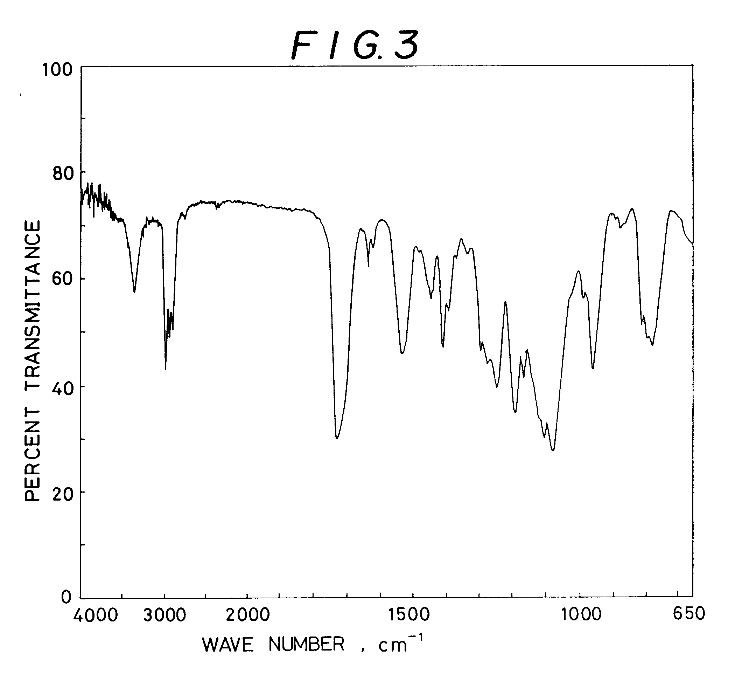

This compound was subjected to measurement by GC-MS, ¹H-NMR spectrometry, IR spectrophotometry and elementary analysis to obtain the results shown below.
- GC-MS analysis: Parent ion peak, 361
- NMR: δ (ppm):
0.54 (t, Si-CH₂, 2H),
1.19 (t, C-CH₃, 9H),
1.59 (m, C-CH₂-C, 2H),
3.09 (q, N-CH₂, 2H),
3.73 (q, O-CH₂, 6H),
4.12 (s, O-CH₂-CH₂-O, 4H)
5.6-6.3 (m, 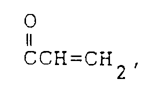 3H
- IR spectrum: As shown in Fig. 3.
Characteristic absorption bands (cm⁻¹)
3350 (N-H); 1729 (C=O); 1636, 1620 (C=C)
- Elementary Analysis: (%)

| | C | H | Si |
|---|---|---|---|
| Calculated: (as C₁₅H₄₄NSiO₇) | 49.6 | 8.0 | 7.7 |
| Found: | 49.7 | 8.0 | 7.8 |

From the foregoing results, the above product was identified to be a compound represented by the formula: 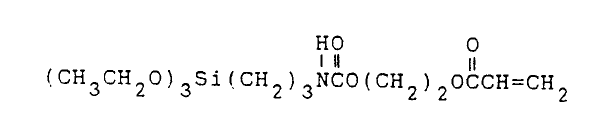
Yield: 70 %.

### Example 4

Example 1 was repeated except for using 7.8 g of 2-hydroxyisopropyl acrylate in place of 2-hydroxyethyl acrylate, to obtain 102 mg of a liquid product having a refractive index n$\frac{\text{25}}{\text{D}}$ of 1.4512.

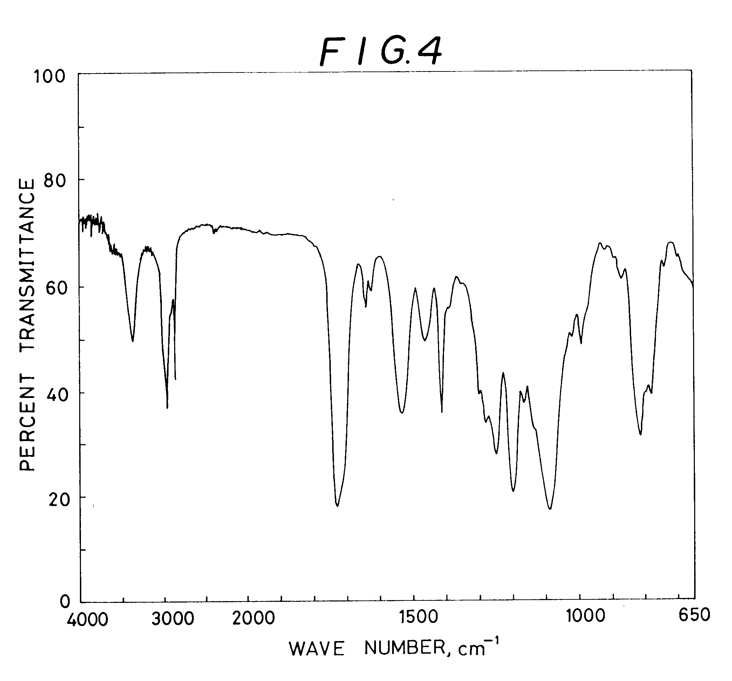

This compound was subjected to measurement by GC-MS, ¹H-NMR spectrometry, IR spectrophotometry and elementary analysis to obtain the results shown below.
- GC-MS analysis: Parent ion peak, 335
- NMR: δ (ppm):
0.67 (t, Si-CH₂, 2H),
1.26 (d, C-C-CH₃, 3H),
1.60 (m, N-CH₂, 2H),
3.10 (q, N-CH₂, 2H),
3.51 (s, O-CH₃, 9H),
4.15 (q, 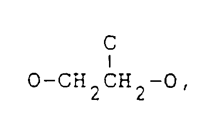 3H),
5.6-6.3 (m, CH=CH₂, 3H)
- IR spectrum: As shown in Fig. 4.
Characteristic absorption bands (cm⁻¹)
3350 (N-H); 1725 (C=O); 1636, 1620 (C=C)
- Elementary Analysis: (%)

| | C | H | Si |
|---|---|---|---|
| Calculated: (as C₁₃H₂₄NSiO₇) | 46.6 | 7.5 | 8.4 |
| Found: | 46.6 | 7.4 | 8.3 |

From the foregoing results, the above product was identified to be a compound represented by the formula: 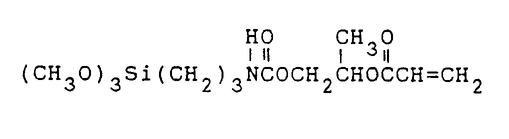
Yield: 73 %.

### Example 5

Example 1 was repeated except for using 8.6 g of 2-hydroxyisopropyl methacrylate in place of 2-hydroxyethyl acrylate, to obtain 116 mg (yield: 84 %) of a liquid product having a refractive index n$\frac{\text{25}}{\text{D}}$ of 1.4507.

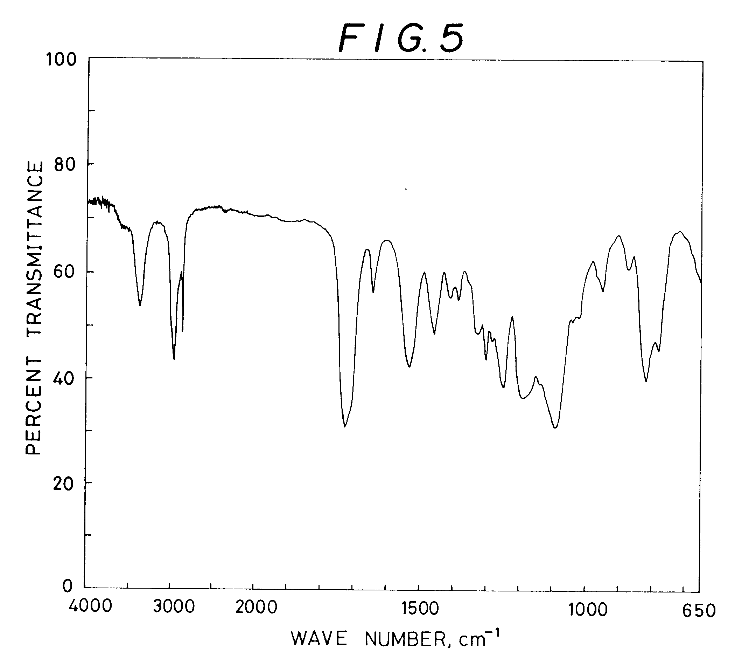

This compound was subjected to measurement by GC-MS, 1H NMR spectrometry, IR spectrophotometry and elementary analysis to obtain the results shown below.
- GC-MS analysis: Parent ion peak, 349
- NMR: δ (ppm):
0.57 (t, Si-CH₂, 2H),
1.27 (d, C-C-CH₃, 3H),
1.61 (m, C-CH₂-C, 2H),
1.95 (s, C=C-CH₃, 3H),
3.11 (q, N-CH₂, 2H),
3.52 (s, O-CH₃, 9H),
4.09 (q, 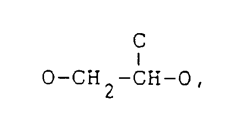 3H),
5.50, 6.04 (s, C=CH₂, 2H)
- IR spectrum: As shown in Fig. 5.
Characteristic absorption bands (cm⁻¹)
3350 (N-H); 1720 (C=O); 1637 (C=C)
- Elementary Analysis: (%)

| | C | H | Si |
|---|---|---|---|
| Calculated: (as C₁₄H₂₆NSiO₇) | 48.1 | 7.8 | 8.0 |
| Found: | 47.9 | 7.6 | 8.2 |

From the foregoing results, the above product was identified to be a compound represented by the formula:

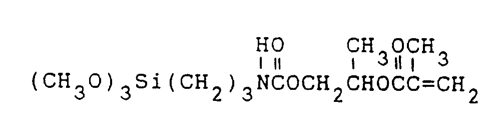

## Claims

1. An organosilicon compound of formula (I): 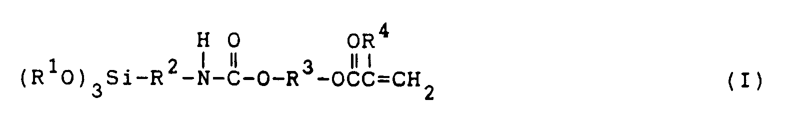 wherein, in each of the R¹O groups, R¹ may be the same or different and represents an alkyl group having 1 to 8 carbon atoms; R² and R³ may be the same or different and represent an alkylene group having 1 to 8 carbon atoms; and R⁴ represents a hydrogen atom or an alkyl group having 1 to 8 carbon atoms;
with the proviso that when R⁴ is a hydrogen atom or methyl group, R² is a C₂₋₅ alkylene group and R³ is a C₂₋₄ alkylene group, R¹, in each of the R¹O groups, is not a C₁₋₅ alkyl group.

2. A process for preparing an organosilicon compound represented by the general formula (I): 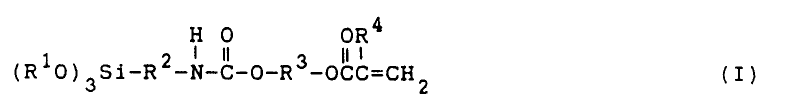 wherein R¹ may be the same or different and represents an alkyl group having 1 to 8 carbon atoms; R² and R³ may be the same or different and represents an alkylene group having 1 to 8 carbon atoms; and R⁴ represents a hydrogen atom or an alkyl group having 1 to 8 carbon atoms,
comprising reacting an organosilicon isocyanate compound represented by the general formula (II):
(R¹O)₃Si-R²-N=C=O (II)
wherein R¹ and R² are as defined above;
with a compound represented by the general formula (III): 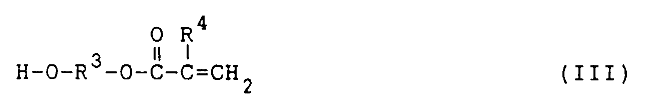 wherein R³ and R⁴ are as defined above;
in the presence of a catalyst.

3. A process according to Claim 2, wherein in the general formulae (I), (II) and (III) R¹ is a methyl group or ethyl group, R² and R³ may be the same or different and are each an alkylene group having 2 to 4 carbon atoms, and R⁴ is a hydrogen atom or a methyl group.

4. A process according to claim 2 or claim 3 wherein said catalyst is selected from the group consisting of organic tin compounds and tert-amines.

5. A process according to Claim 4, said catalyst is is selected from dibutyltin maleate, tributyltin acetate, dimethyltin dichloride, dibutyltin diacetate, dibutyltin dilaurate, N-methylmorpholine, triethylamine, N-methylpiperidine, N,N-dimethylcyclohexylamine and pyridine.

6. A process according to any of claims 2 to 5 wherein the reaction of the organosilicon compound of the general formula (II) with the compound of the general formula (III) is carried out in the absence of solvent.

7. A process according to any of claims 2 to 5 wherein the reaction of the organosilicon compound of the general formula (II) with the compound of the general formula (III) is carried out in solvent.

8. The use of a compound of formula (I) as defined in claim 2 for improving the adhesive properties of UV-curable silicone compositions.

## Patentansprüche

1. Organosiliciumverbindung der Formel (I): 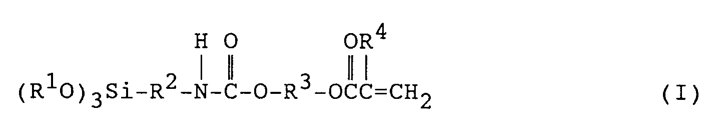 worin in jeder der R¹O-Gruppen, R¹ gleich oder verschieden sein kann und eine Alkylgruppe mit 1 bis 8 Kohlenstoffatomen darstellt; R² und R³ gleich oder verschieden sein können und eine Alkylengruppe mit 1 bis 8 Kohlenstoffatomen darstellen; und R⁴ ein Wasserstoffatom oder eine Alkylgruppe mit 1 bis 8 Kohlenstoffatomen darstellt; mit der Maßgabe, daß wenn R⁴ ein Wasserstoffatom oder eine Methylgruppe bedeutet, R² eine C₂₋₅-Alkylengruppe darstellt und R³ eine C₂₋₄-Alkylengruppe bedeutet, R¹ in jeder der R¹O-Gruppen keine C₁₋₅-Alkylgruppe bedeutet.

2. Verfahren zur Herstellung einer Organosiliciumverbindung, wiedergegeben durch die allgemeine Formel (I): 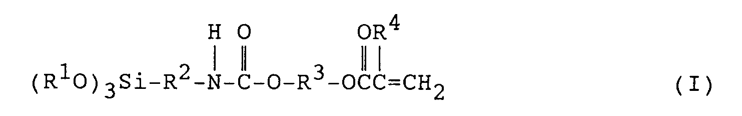 worin R¹ gleich oder verschieden sein kann und eine Alkylgruppe mit 1 bis 8 Kohlenstoffatomen darstellt; R² und R³ gleich oder verschieden sein können und eine Alkylengruppe mit 1 bis 8 Kohlenstoffatomen darstellen; und R⁴ ein Wasserstoffatom oder eine Alkylgruppe mit 1 bis 8 Kohlenstoffatomen darstellt; umfassend Umsetzen einer Organosiliciumisocyanatverbindung, wiedergegeben durch die allgemeine Formel (II):
(R¹O)₃Si-R²-N=C=O (II)
worin R¹ und R² wie vorstehend definiert sind; mit einer Verbindung, wiedergegeben durch die allgemeine Formel (III): 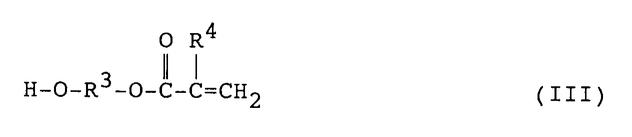 worin R³ und R⁴ wie vorstehend definiert sind in Gegenwart eines Katalysators.

3. Verfahren nach Anspruch 2, wobei in den allgemeinen Formeln (I), (II) und (III) R¹ eine Methylgruppe oder Ethylgruppe bedeutet, R² und R³ gleich oder verschieden sein können und jeweils eine Alkylengruppe mit 2 bis 4 Kohlenstoffatomen darstellen und R⁴ ein Wasserstoffatom oder eine Methylgruppe bedeutet.

4. Verfahren nach Anspruch 2 oder Anspruch 3, wobei der Katalysator ausgewählt ist aus der Gruppe, bestehend aus organischen Zinnverbindungen und tertiären Aminen.

5. Verfahren nach Anspruch 4, wobei der Katalysator ausgewählt ist aus Dibutylzinnmaleat, Tributylzinnacetat, Dimethylzinndichlorid, Dibutylzinndiacetat, Dibutylzinndilaurat, N-Methylmorpholin, Triethylamin, N-Methylpiperidin, N,N-Dimethylcyclohexylamin und Pyridin.

6. Verfahren nach einem der Ansprüche 2 bis 5, wobei die Umsetzung der Organosiliciumverbindung der allgemeinen Formel (II) mit der Verbindung der allgemeinen Formel (III) in Abwesenheit von Lösungsmittel ausgeführt wird.

7. Verfahren nach einem der Ansprüche 2 bis 5, wobei die Umsetzung der Organosiliciumverbindung der allgemeinen Formel (II) mit der Verbindung der allgemeinen Formel (III) in einem Lösungsmittel ausgeführt wird.

8. Verwendung einer Verbindung der Formel (I) gemäß Anspruch 2 zur Verbesserung der Hafteigenschaften von UV-härtbaren Siliconmassen.

## Revendications

1. Composé organique du silicium de formule (I) : 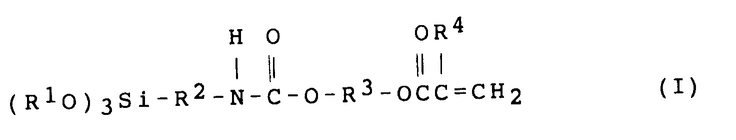 dans laquelle, dans chacun des groupes R¹O, R¹ peut être identique ou différent et représente un groupe alkyle ayant de 1 à 8 atomes de carbone, R² et R³ peuvent être identiques ou différents et représentent un groupe alkylène ayant de 1 à 8 atomes de carbone et R⁴ représente un atome d'hydrogène ou un groupe alkyle ayant de 1 à 8 atomes de carbone,
sous réserve que, si R⁴ représente un atome d'hydrogène ou un groupe méthyle, R² un groupe alkylène en C₂ à C₅ et R³ un groupe alkylène en C₂ à C₄, R¹ n'est un groupe alkyle en C₁ à C₅ dans aucun des groupes R¹O.

2. Procédé pour préparer un composé organique du silicium représenté par la formule générale (I) : 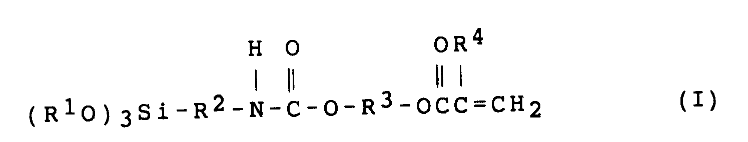 dans laquelle R¹ peut être identique ou différent et représente un groupe alkyle ayant de 1 à 8 atomes de carbone, R² et R³ peuvent être identiques ou différents et représentent un groupe alkylène ayant de 1 à 8 atomes de carbone et R⁴ représente un atome d'hydrogène ou un groupe alkyle ayant de 1 à 8 atomes de carbone,
lequel procédé comprend que l'on fait réagir un isocyanate organique de silicium, représenté par la formule générale (II) :
(R¹O)₃Si-R²-N=C=O (II)
dans laquelle R¹ et R² sont tels que définis précédemment,
avec un composé représenté par la formule générale (III) : 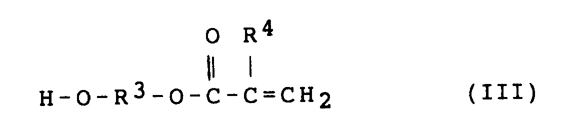 dans laquelle R³ et R⁴ sont tels que définis précédemment,
en présence d'un catalyseur.

3. Procédé conforme à la revendication 2, dans lequel, dans les formules générales (I), (II) et (III), R¹ est un groupe méthyle ou un groupe éthyle, R² et R³ peuvent être identiques ou différents et représentent chacun un groupe alkylène ayant de 2 à 4 atomes de carbone, et R⁴ est un atome d'hydrogène ou un groupe méthyle.

4. Procédé conforme à la revendication 2 ou à la revendication 3, dans lequel ledit catalyseur est choisi dans le groupe constitué par des composés organiques de l'étain et des amines tertiaires.

5. Procédé conforme à la revendication 4, dans lequel ledit catalyseur est choisi parmi le maléate de dibutyl-étain, l'acétate de tributyl-étain, le dichlorure de diméthyl-étain, le diacétate de dibutyl-étain, le dilaurate de dibutyl-étain, la N-méthylmorpholine, la triéthylamine, la N-méthylpipéridine, la N,N-diméthylcyclohexylamine et la pyridine.

6. Procédé conforme à l'une quelconque des revendications 2 à 5, dans lequel la réaction du composé organique du silicium de formule générale (II) avec le composé de formule générale (III) est effectuée en l'absence de solvant.

7. Procédé conforme à l'une quelconque des revendications 2 à 5, dans lequel la réaction du composé organique du silicium de formule générale (II) avec le composé de formule générale (III) est effectuée dans un solvant.

8. Utilisation d'un composé de formule (I) tel que défini dans la revendication 2 pour améliorer les propriétés adhésives de compositions de silicones durcissables sous l'action du rayonnement ultraviolet.
